# EUROPEAN PATENT APPLICATION

(11) **EP 0 637 900 A1**
(43) Date of publication of application: **08.02.1995**
(21) Application number: 94830375.5
(22) Date of filing: 25.07.1994
(51) Int. Cl.: H05F 3/04, H05F 3/00

(54) **Method and device for the extraction of electrons from a space vehicle**

(30) Priority: 06.08.1993 IT FI930158
(71) Applicant: PROEL TECNOLOGIE S.p.A., I-50125 Firenze (IT)
(72) Inventor: Cirri, Gianfranco, 50129 Firenze (IT)
(74) Representative: Mannucci, Gianfranco, Dott.-Ing.

(57) **Abstract**

To avoid the accumulation of negative charges on a satellite (S), it is proposed to use a photocathode (1) possibly associated with accelerating electrodes (21, 23) - which emits electrons when it is struck by light radiation from a suitable source (3). The photocathode is connected to the satellite and can expel electrons from the satellite, thus controlling its potential with respect to the surrounding environment.

## Description

The invention relates to a method and to a device for controlling the electrical potential of a space vehicle or of its parts with respect to the electrical potential of the environment in which the satellite moves.

It is well known that in an ionospheric environment the presence of charged particles produced by the ionization of the atmospheric gases, generated by cosmic rays and by solar radiation, frequently causes the electrostatic charging of the satellite. Charged particles present in the environment in which the satellite moves are deposited on the metal and dielectric parts of the satellite, causing an electrical charging of the satellite with the consequent formation of a potential difference (and therefore an electrical field) between the space vehicle and its environment and/or between certain parts of the space vehicle and other parts thereof and/or between certain parts of the satellite and the environment.

The presence of a potential difference between the satellite and the environment (known as the "space vehicle charging phenomenon") may reach high values, up to tens of kV.

The electrical fields formed in the vicinity of the vehicle may give rise to surface and body electrical discharges with consequent phenomena of generation of electromagnetic waves. The presence of such phenomena may cause effects varying from the incorrect operation of the analog and digital on-board electrical instrumentation to the actual damage of said instrumentation. This phenomenon is also dangerous for any personnel on board the satellite in the case of possible extra-vehicular missions and any docking maneuvers between different vehicles (for example, a space shuttle and an orbiting station).

The methods currently used to limit or prevent the space vehicle electrical charging phenomena are of two types: passive and active.

The former use "grounding techniques" (electrical connection between the various parts of the satellite) combined with the use of special conductive coatings on the surfaces of the satellite to limit the deposition of the charges originating from the environment; the latter use active means which cause the expulsion from the satellite of the charges accumulated there.

The passive methods do not yield completely satisfactory results, since it has not yet been possible to cover the surfaces of the satellites completely with the coating. Furthermore, this technology is expensive and subject to easy deterioration.

The active methods are generally based on active plasma devices normally produced also for other purposes, in particular as ion thrusters and neutralizers therefor. These active systems are generally also used to expel the excess charges from a space vehicle, thereby limiting and preventing phenomena of excessive electrical charging.

These are charged particle generating devices, which however also require supply systems of considerable electrical power and gas propellants to be ionized for their operation, with the corresponding tanks and flow lines.

The presence of numerous components and electrical power supplies results in an additional mass which is not insignificant and makes it necessary to carry out complicated start-up procedures to permit correct operation, with consequent continuous monitoring by the crew or computer on board. Additionally, sensors which measure the potential of the satellite and signal this to the monitoring means are required.

Additionally, active systems can be used only for a limited period which depends on the quantity of propellant present on board the space vehicle.

Another disadvantage of the use of these systems for controlling the potential of the space vehicle consists in the fact that they cannot respond immediately to the operating command: a start-up period of the order of a few minutes is necessary. This means that the control of the potential of a space vehicle cannot be provided in real time.

To overcome the problems mentioned above, it has been suggested (EP-A-0488973) that an electron gun be used in a special configuration which enables it to operate in automatic mode without the need for external control.

The present invention proposes a new method and a new device which enable the electrical potential of a space vehicle to be controlled and which overcome the disadvantages of the present methods described previously. The method and device according to the present invention also provide simplicity of construction, ease of control, and operation at the correct time.

These and other objects and advantages, which will be understood by those skilled in the art from the following text, are obtained according to the invention with a device comprising, in combination: a photocathode electrically connected to a portion of the satellite; preferably, an accelerating means for the acceleration of the electrons emitted from said photocathode; and a light source capable of exciting the photocathode and causing the emission of electrons.

The photocathode forms a device which, owing to the particular properties of the active part of its surface, can emit electrons when said surface is irradiated by light radiation of suitable intensity and wavelength, depending on the type of photocathode.

The light source may keep the photocathode continuously in an emitting state, the photocathode emitting electrons toward the exterior when the potential of the portion of the satellite to which it is connected is less than the potential of the environment (satellite negatively charged).

The photocathode is advantageously kept at the potential of the corresponding portion of the satellite to which it is electrically connected. A voltage generator keeps the accelerating means (consisting of a grid, an accelerating anode, or other element) at a positive voltage with respect to the relative portion of the satellite. This configuration, known per se in combination with an electron gun (EP-A-0488973) enables the power consumption to be reduced to a minimum, since the current flowing through the voltage generator corresponds only to the leakage current.

Further advantageous, non-restrictive, characteristics and embodiments of the device according to the invention are indicated in the attached claims.

The method according to the invention for extracting electrons from a space vehicle comprises the following stages: electrically connecting a photocathode to a portion of the satellite; stimulating by light radiation the emission of electrons by the photocathode; and accelerating the electrons emitted from said photocathode toward the external environment of the satellite.

Further advantageous embodiments of the method according to the invention are indicated in the attached claims.

The invention will be more clearly understood from the description and the attached drawing which shows a non-restrictive practical embodiment of the invention. In the drawing:
Fig. 1 shows the device according to the invention in one embodiment;
Fig. 2 shows a variant of the embodiment in Fig. 1, preferable to the embodiment in Fig. 1;
Fig. 3 is a schematic overall view of a satellite on which two devices according to the invention are mounted to control the potential of two electrically isolated areas of the satellite; and
Fig. 4 shows a configuration in which the single photocathode can be connected alternately to different areas of the satellite which are electrically isolated from each other.

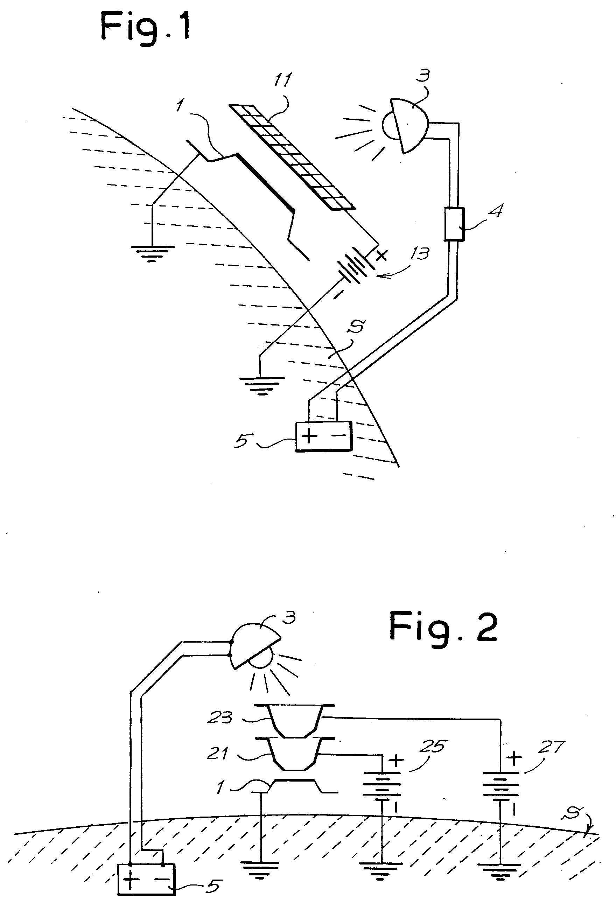

With reference initially to Fig. 1, in a first embodiment of the invention a photocathode 1, of suitable shape and material, is electrically connected in a suitable way to the structure of a satellite S. The photocathode is illuminated by a light source 3, disposed in front of the photocathode in a suitable position and supplied with a simple battery 5 or connected to the primary power supply system of the satellite S (solar cells, for example). The photocathode 1, made active by the light source 3, is capable of emitting electrons toward the exterior; these are then accelerated by the electrical fields close to the surface of the space vehicle.

The system also envisages the use of suitable means for accelerating the emitted electrons, which facilitate the expulsion toward the exterior of the electrons emitted by the photocathode. In Fig. 1, said accelerating means consist of a grid 11 which is polarized positively with respect to the potential of the satellite by a suitable power supply 13 or power supply system.

In a possible, at present preferred, embodiment of the invention, illustrated in Fig. 2, the device may provide at least one or more accelerating means and consequently more than one power supply, to optimize the process of electron extraction. In Fig. 2, the accelerating means consist of two accelerating electrodes 21, 23 connected to power supplies 25, 27. The numbers 1 and 3 again indicate the photocathode and the light source respectively.

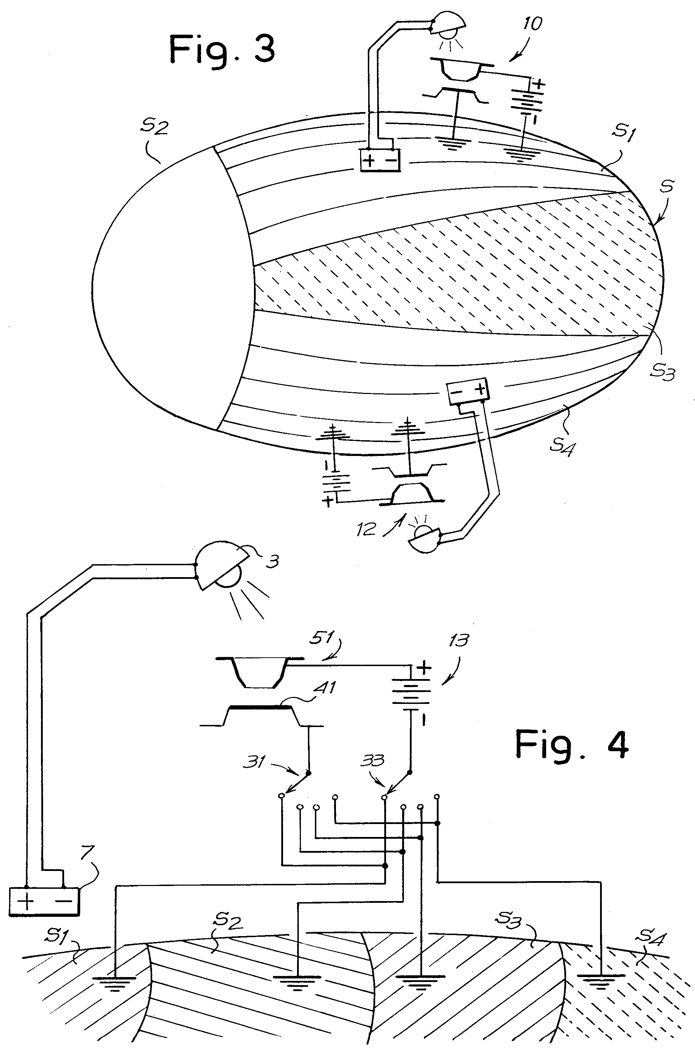

The satellite may typically have portions or areas isolated electrically from each other, on which a potential variable from area to area may be generated. In these conditions it may be advantageous to have a plurality of discharging devices associated with the various areas of the satellite. Fig. 3 shows in a highly schematic way a satellite S divided into four portions S1, S2, S3, and S4, electrically isolated from each other or connected together electrically through a high resistance. The portions S1 and S4 are associated with two separate electron extraction devices, indicated in a general way by 10 and 12 respectively, which may be of the type shown in Fig. 2. The areas S2 and S3 may be provided with similar devices or with devices of other suitable types, for example those which extract positive charges. In this way it is possible to control the potential of the various areas of the satellite precisely, limiting not only the formation of a potential difference between the satellite and the environment, but also the formation of electrical fields between individual portions of the satellite.

In Fig. 3, single electrodes or, as indicated in Fig. 2, double electrodes, are provided as accelerators, however, the configuration of Fig. 1 can also be adopted for the devices 10 and 12.

According to a further possible variant embodiment of the device according to the invention, illustrated in Fig. 4, the system may have suitable switching means 31, 33 to connect the photocathode alternately to one or another of a plurality of portions S1-S4 of the satellite. In this way the same photocathode may be used to discharge different areas of the satellite. The switching means 31 are used to switch the connection of the photocathode 41, while the switching means 33 switch the connection of the voltage source 13. The accelerating means 51 may have the configuration shown in Fig. 2, possibly with a single accelerating electrode.

The device described above can be used (in its various embodiments) to control the negative charges accumulated on the space vehicle and consequently the potential of the satellite, by causing the expulsion of the excess electrons from the space vehicle by means of the lighting of the light source disposed in front of the photocathode electrically connected to the vehicle.

With the device according to the invention the flow of particles emitted from the photocathode can be regulated simply by controlling the intensity of light emitted by the light source disposed in front of the photocathode. In Fig. 1, the number 4 indicates a schematic representation of a light intensity regulator for this purpose. This permits adaptation to various environmental conditions and control of the potential of the space vehicle in different conditions of flow of charged particles from the exterior, thus making this system suitable for a plurality of ionospheric conditions and for the elimination of potential induced by causes of various types.

It is to be understood that the drawing shows only an example provided solely as a practical demonstration of the invention, and that this invention may be varied in its forms and arrangements without thereby departing from the scope of the guiding concept of the invention. The presence of reference numbers in the enclosed claims has the purpose of facilitating reading of the claims with reference to the description and to the drawing, and does not limit the scope of protection represented by the claims.

## Claims

1. A device for the extraction of electrons from a space vehicle, comprising, in combination: a photocathode (1) electrically connected to a portion of the satellite (S); and a light source (3) capable of exciting the photocathode (1).

2. The device as claimed in claim 1, additionally comprising an accelerating means (11; 21, 23) for the acceleration of the electrons emitted from said photocathode (1).

3. The device as claimed in claim 1 or 2, wherein the photocathode (1) is kept at the potential of the corresponding portion of the satellite (S) and in which a voltage generator (13; 25, 27) keeps the accelerating means (11; 21, 23) at a positive voltage with respect to said portion of satellite (S).

4. The device as claimed in claim 1 or 2 or 3, wherein the accelerating means comprise an accelerating grid (11).

5. The device as claimed in claim 1, 2, or 3, wherein the accelerating means comprise a hollow accelerating electrode (21, 23).

6. The device as claimed in one or more of the preceding claims, wherein the accelerating means comprise two accelerating electrodes in series (21, 23) at different potentials.

7. The device as claimed in one or more of the preceding claims, wherein a switching means (31) is provided which connects the photocathode (1) alternately to any portion of the satellite, selected from a plurality of portions (S1, S2, S3, S4) into which said satellite (S) is divided.

8. The device as claimed in one or more of claims 3 to 6, wherein a further switching means (33) is provided which connects the voltage generator (13) from time to time to the portion of satellite to which the photocathode is connected at that moment.

9. The device as claimed in one or more of the preceding claims, comprising regulator means (4) to regulate the light intensity of said source (3).

10. A method for extracting electrons from a space vehicle, comprising the following stages:
- electrically connecting a photocathode to a portion of the satellite; and
- stimulating by light radiation the emission of electrons by said photocathode.

11. The method as claimed in claim 10, comprising additionally the stage of accelerating the electrons emitted from said photocathode toward the external environment of the satellite.

12. The method as claimed in claim 11, wherein the electrons are accelerated by an accelerating means disposed in front of the photocathode and kept at a positive potential with respect to the photocathode.

13. The method as claimed in claim 10, 11, or 12, wherein the photocathode is kept at the same potential as the portion of satellite to which it is electrically connected.

14. The method as claimed in one or more of claims 10 to 13, wherein the photocathode is electrically connected successively to different portions of the satellite which are electrically isolated from each other.

15. The method as claimed in one or more of claims 10 to 14, wherein the emission of electrons from said photocathode is regulated by regulation of the intensity of said light radiation.
